# EUROPÄISCHE PATENTSCHRIFT

(11) **EP 1 634 785 B1**
(45) Veröffentlichungstag und Bekanntmachung des Hinweises auf die Patenterteilung: **16.01.2008**
(21) Anmeldenummer: 05016475.5
(22) Anmeldetag: 29.07.2005
(51) Int. Cl.: B60T 7/12, B60T 8/32

(54) **Verfahren zum Betreiben eines Fahrzeugs**
Procedure for operating a vehicle
Procédé d'opération d'un véhicule

(30) Priorität: 13.08.2004 DE 102004039269
(43) Veröffentlichungstag der Anmeldung: 15.03.2006
(73) Patentinhaber: AUDI AG, 85045 Ingolstadt (DE)
(72) Erfinder: Landsiedel, Thomas, 85080 Gaimersheim (DE)
(74) Vertreter: Thielmann, Frank

(56) Entgegenhaltungen:
- DE-A1- 19 734 567
- US-A- 5 924 508
- US-B1- 6 296 326

## Beschreibung

Die vorliegende Erfindung betrifft ein Verfahren zum Betreiben eines Fahrzeugs, wie es beispielsweise aus der DE 196 29 229 C2 als bekannt hervorgeht.

Während des Betriebs des Fahrzeugs kann es zu kritischen Fahrsituationen kommen, bei denen ein schnellstmögliches Bremsen des Fahrzeugs erwünscht ist. In diesem Zusammenhang soll das Vorliegen eines solchen Fahrzustandes möglichst aus Pedalbetätigungen des Fahrers heraus erkannt werden und ein Bremsvorgang dann so durchgeführt werden, dass ein sehr rascher Bremsdruckaufbau in der Bremsanlage erfolgt.

Es ist dabei bekannt, dass das Fahrzeug ein fahrerbetätigbares Fahrpedal aufweist, welches der Vorgabe einer Leistungsanforderung für die Antriebseinrichtung des Fahrzeugs dient. Daneben ist ein fahrerbetätigbares Bremspedal vorgesehen, das der Durchführung von Bremsvorgängen dient. Aufgrund einer stattfindenden Betätigung des Bremspedals wird die Bremsanlage des Fahrzeugs im Sinne des Erzeugens einer Bremswirkung angesteuert.

Bei der aus der DE 196 29 229 C2 bekannten Vorgehensweise wird dann auf eine Situation geschlossen, bei der ein automatischer Bremsvorgang durchgeführt werden soll, wenn neben dem Überschreiten eines Grenzwertes für die Rücknahmegeschwindigkeit des Fahrpedals noch ein Umsetzen des Fahrerfußes vom Fahrpedal auf das Bremspedal festgestellt wird.

Das Erfordernis, dass eine Umsetzbewegung des Fahrerfußes von Gaspedal auf Bremspedal für das Auslösen des automatischen Bremsvorgangs erforderlich gemacht wird, verzögert den Beginn des automatischen Bremsvorgangs von dem Zeitpunkt an, bei dem ein Überschreiten der Rücknahmegeschwindigkeit des Fahrpedals eintritt.

Aus der US 6,296,326 B1 ist ein Verfahren zur Bestimmung eines Auslöseschwellenwerts für einen automatischen Bremsvorgang bekannt. Der Wert des Auslöseschwellenwerts wird in Abhängigkeit der Betätigungsgeschwindigkeit des Gaspedals, der Betätigungsgeschwindigkeit des Kupplungspedals und der Betätigungsgeschwindigkeit des Gangwechselschalthebels bestimmt.

Aus der US 5,924,508 A ist ein Verfahren zur Durchführung eines automatischen Bremsvorgangs beschrieben.

Darüber hinaus ist aus der DE 197 34 567 A1 ein Verfahren gemäß dem Oberbegriff des Patentanspruchs 1 bekannt.

Aufgabe der vorliegenden Erfindung ist es, das Einleiten eines automatischen Bremsvorganges so früh wie möglich durchzuführen.

Die der Erfindung zugrunde liegende Aufgabe wird durch ein erfindungsgemäßes Verfahren zum Betreiben eines Fahrzeugs gelöst.

Bei einem derartigen Verfahren weist das Fahrzeug ein fahrerbetätigbares Fahrpedal zur Vorgabe einer Leistungsanforderung für die Antriebseinrichtung des Fahrzeugs und ein fahrerbetätigbares Bremspedal zur Durchführung von Bremsvorgängen auf. Aufgrund einer stattfindenden Betätigung des Bremspedals wird die Bremsanlage im Sinne des Erzeugens einer Bremswirkung ansteuerbar. Es wird gemäß der Erfindung als Ausgangsstellung die Stellung eines Fahrpedals zu Beginn einer Betätigung durch den Fahrer sowie eine Betätigungsgeschwindigkeit des Fahrpedals erfasst. Aufgrund der Ausgangsstellung wird ein Betätigungsschwellenwert ermittelt, und es wird überwacht, ob die Betätigungsgeschwindigkeit den Betätigungsschwellenwert überschreitet, sofern die Betätigung des Fahrpedals im Sinne des Erzeugens einer geringeren Leistungsanforderung an die Antriebseinrichtung erfolgt. Überschreitet die Betätigungsgeschwindigkeit den Betätigungsschwellenwert, so wird ein selbstständiges Betätigen der Bremsanlage durchgeführt.

Das selbsttätige Betätigen der Bremsanlage erfolgt erst dann, wenn das Fahrpedal die unbetätigte Ausgangsstellung erreicht hat. Diese Maßnahme kann in vorteilhafter, weiterführender Ausgestaltung der Erfindung dazu verwendet werden, dass rasche Fahrpedalbetätigungen eines nervös das Fahrpedal betätigenden Fahrers von Fahrpedalbetätigungen zu unterscheiden, die zu einem anschließenden Bremsvorgang führen könnten.

Durch diese Maßnahme wird das Auslösen eines automatischen Betätigens der Bremsanlage allein von der Betätigung des Fahrpedals abhängig gemacht. Ein selbsttätiges Betätigen der Bremsanlage kann also zu einem Zeitpunkt erfolgen, in dem eine Umsetzbewegung des Fahrfußes vom Fahrpedal zum Bremspedal noch nicht erfolgt. Ein selbsttätiger Bremsvorgang kann demgemäß zu einem früheren Zeitpunkt eingeführt werden.

Selbsttätige Betätigungen der Bremsanlage oder automatischer Bremsvorgänge können dabei in unterschiedlicher Form gestaltet werden. So kann ein solches selbsttätiges Betätigen der Bremsanlage lediglich das Überwinden der Lüftspiele und das Anlegen der Bremsbeläge an die Bremsscheiben der Bremsanlage umfassen, wodurch noch keine große Verzögerung des Fahrzeugs erreicht wird, andererseits ist es aber auch möglich, dass der selbsttätige Bremsvorgang so gestaltet ist, dass eine bestimmte Verzögerung oder ein bestimmter Bremsdruck aufgebaut wird.

Endlich ist die Gestaltung des Bremsvorgangs, der durchgeführt wird, unabhängig von dem Auslösekriterium und kann in vielfältiger Weise durchgeführt werden, wobei unterschiedliche Vorgehensweisen für automatische Bremsvorgänge aus dem Stand der Technik bekannt sind. Auch unterschiedlichste Kriterien zur Beendung eines derartigen automatischen Bremsvorgangs sind bekannt. Besonders zu erwähnen ist hier lediglich das Kriterium, dass dann, wenn eine Betätigung des Fahrpedals im Sinne des Erhöhens einer Leistungsanforderung an die Antriebseinrichtung erfolgt, der selbsttätige Bremsvorgang abgebrochen und der Bremsvorgang beendet wird.

Es entspricht einer vorteilhaften Ausgestaltung der Erfindung, wenn die Ausgangsstellung des Fahrpedals aus der Position des Fahrpedals bei einem Vorzeichenwechsel des Wertes der Betätigungsgeschwindigkeit geschlossen wird. In Fahrzeugen wird in der Regel die Stellung des Fahrpedals über einen Signalgeber erfasst und der Weg daraus abgeleitet. Die numerische Ableitung des Signals des Weges ergibt die Geschwindigkeit, so dass die Betätigungsgeschwindigkeit in einfacher Weise im Fahrzeug errechenbar ist.

Ein Wechsel der Richtung der Betätigungsgeschwindigkeit von einer Betätigung im Sinne erhöhender Leistungsanforderungen in Richtung auf konstante Werte oder leicht absinkende Werte der Leistungsanforderung ergeben die Ausgangsposition des Fahrpedals zu dem Zeitpunkt bevor die Betätigung, die zu einer raschen Rücknahme des Fahrpedals führt, beginnt. Es kann in dieser Weise stets der letzte Wert für die Pedalauslenkung ermittelt werden, bevor die Rücknahme beginnt.

Gemäß bevorzugter Ausführungsform der Erfindung ist vorgesehen, dass der Betätigungsschwellenwert als monoton steigende Funktion in Abhängigkeit der Ausgangsstellung des Fahrpedals vorgegeben ist. Dies trägt der Tatsache Rechnung, dass bei geringen Fahrpedalauslenkungen aus der unbetätigten Ausgangsstellung, die in der Regel die Stellung ist, in der die Leistungsanforderung für die Antriebseinrichtung des Fahrzeugs am geringsten ist, nicht mehr so große maximale Betätigungsgeschwindigkeiten bei der Rücknahme des Fahrpedals erreichbar sind. Es entspricht bevorzugter Ausgestaltung, dass die Zuordnungsfunktion vorsieht, dass bei Fahrpedalauslenkungen von weniger als 5% bis 10 %, also einem unteren Bereich der Ausgangsstellungen, der Betätigungsschwellenwert bei ca. 10%, also beispielsweise vorzugsweise zwischen 5% und 15% liegt.

Es entspricht bevorzugter weiterführender Ausgestaltung der Erfindung, wenn - zumindest außerhalb des unteren Bereichs - die Zuordnungsfunktion zwischen dem Betätigungsschwellenwert und der Ausgangsstellung als streng monoton steigende Funktion, insbesondere lineare Funktion gegeben ist.

Es entspricht einer weiteren alternativen oder ergänzenden Ausgestaltung, wenn in einem oberen Bereich von Ausgangsstellungen insbesondere im Bereich oberhalb von ca. 90% des maximalen Betätigungswegs des Fahrpedals die monoton steigende Funktion einen sprunghaften Anstieg aufweist, und insbesondere oberhalb dieses sprunghaften Anstiegs auf einem Plateau verharrt. Dies ist, vor allem in Verbindung mit Fahrzeugen, die über ein Handschaltgetriebe verfügen, von Vorteil. Bei Fahrzeugen mit Handschaltgetriebe kommt es bei manchen Fahrern dazu, dass sie aus einem Vollgasfahrzustand heraus rasch einen Gangwechsel vornehmen wollen. In diesen Fällen wird das Gaspedal auch schlagartig zurückgenommen und die Betätigungsgeschwindigkeit des Fahrpedals erreicht ebenfalls nahezu den maximal möglichen Wert, welcher sich aus den konstruktiven Gegebenheiten der Rückstellelemente ergibt und nicht überschritten werden kann. Zur Unterscheidung ist hier ein besonders angepasster Betätigungsschwellenwert festzusetzen.

Im Übrigen ist die Erfindung nachfolgend anhand eines in der Zeichnung dargestellten Ausführungsbeispiels näher erläutert. Dabei zeigt:
- Figur 1: das Flussdiagramm eines erfindungsgemäßen Verfahrens, und
- Figur 2: ein Beispiel für die Funktion zwischen Ausgangsstellung und Betätigungsschwellenwert.

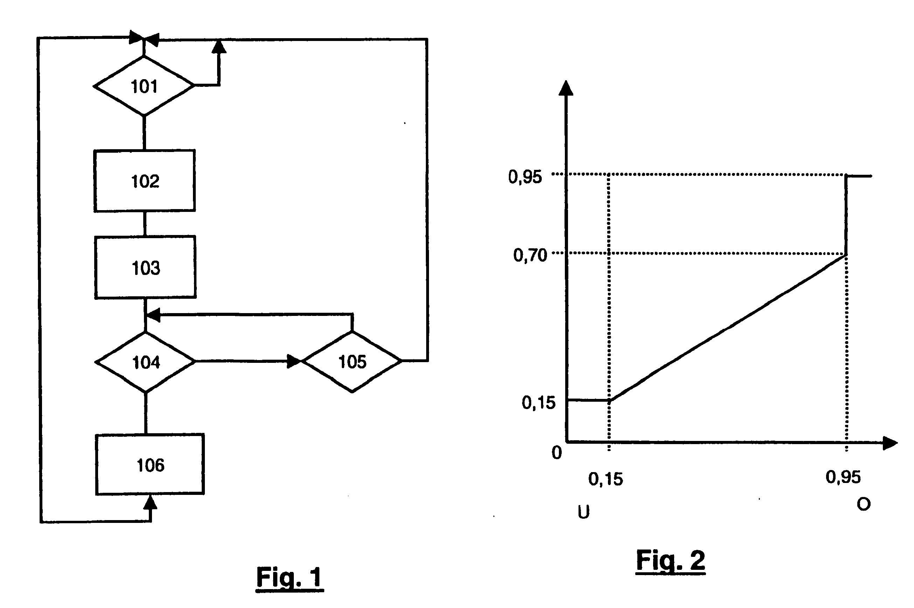

Die Figur 1 zeigt ein schematisches Blockdiagramm eines erfindungsgemä-ßen Verfahrens. Gemäß dem Schritt 101 wird überprüft, ob das Vorzeichen der Betätigungsgeschwindigkeit des Fahrpedals sich ändert. Ist dies nicht der Fall, so wird zum Schritt 101 zurückgesprungen, und zwar solange, bis das Ereignis eintritt. Nach einem Wechsel im Vorzeichen der Betätigungsgeschwindigkeit wird der Wert der Ausgangsstellung zu diesem Zeitpunkt abgespeichert, dies erfolgt gemäß dem Schritt 102. Gemäß dem Schritt 103 wird dann aus der Ausgangsstellung, beispielsweise anhand der Funktion gemäß Figur 2, der Betätigungsschwellenwert ermittelt. Im Anschluss daran wird entsprechend dem Schritt 104 überwacht, ob die Betätigungsgeschwindigkeit den Betätigungsschwellenwert übersteigt. Ist dies nicht der Fall, so wird gemäß dem Schritt 105 überprüft, ob die Betätigung im Sinne des Erreichens geringerer Vorgaben für die Leistungsanforderung für die Antriebseinrichtung des Fahrzeugs beendet wurde. Ist dies der Fall, beispielsweise dann, wenn das Fahrpedal die unbetätigte Ausgangsstellung erreicht oder erneut eine Betätigung des Fahrpedals in Richtung auf höhere Werte erfolgt, so wird erneut zum Ausgangspunkt, nämlich dem Schritt 101 gesprungen. In dem Fall, dass die Betätigung des Fahrpedals im Sinne geringerer Leistungsanforderungen für die Antriebseinrichtung des Fahrzeugs weiter fortgeführt wird, wird vom Schritt 105 wieder zum Schritt 104 zurückgesprungen.

Wird im Schritt 104 festgestellt, dass die Betätigungsgeschwindigkeit den aufgrund der Ausgangsstellung ermittelten Betätigungsschwellenwert übersteigt, so wird gemäß dem Schritt 106 ein automatischer Bremsvorgang durchgeführt. Nach der Beendigung des automatischen Bremsvorgangs, was durch entsprechende Abbruchkriterien überprüft wird, wird wieder zum Schritt 101 zurückgesprungen, und das Verfahren beginnt erneut.

Die Figur 2 zeigt eine mögliche Zuordnungsfunktion zwischen dem Fahrpedalausgangswert, wie er im Schritt 102 ermittelt wird, und dem daraus abgeleiteten Betätigungsschwellenwert. Dabei ist jeweils eine Skala von 0 auf 1 gewählt, also die relative Angabe zur maximalen Betätigung bzw. zur maximalen Betätigungsgeschwindigkeit des Fahrpedals in die Ausgangsstellung hin dargestellt.

Figur 2 zeigt eine über einen großen Bereich von möglichen Ausgangsstellungen hinweg gegebene lineare Zuordnungsfunktion. In einem unteren Bereich U ist ein konstante Zuordnungsfunktion unabhängig von Fahrpedalausgangswert gegeben. Im Bereich von bis zu 15% der Auslenkung des Fahrpedals beträgt der Betätigungsschwellenwert 15% der maximalen Fahrpedalrückstellgeschwindigkeit. Aus der unbetätigten Ruhestellung heraus beträgt der Betätigungsschwellenwert 15%. In dem oberen Bereich O, der beispielsweise bei ca. 95% Auslenkung beginnt steigt der Betätigungsschwellenwert sprunghaft an und verharrt dann auf einem Plateau. Der Betätigungsschwellenwert liegt dabei in diesem Bereich beispielsweise bei 0,95. In dem Bereich zwischen dem oberen und dem unteren Bereich verhält sich die Funktion, die den Betätigungsschwellenwert in Abhängigkeit der Ausgangsstellung wiedergibt linear und nimmt entsprechend Werte zwischen 0,15 und 0,7 an.

## Patentansprüche

1. Verfahren zum Betreiben eines Fahrzeugs
- mit einem fahrerbetätigbaren Fahrpedal zur Vorgabe einer Leistungsanforderung für die Antriebseinrichtung des Fahrzeugs
- mit einem fahrerbetätigbaren Bremspedal zur Durchführung von Bremsvorgängen,
- wobei aufgrund einer stattfindenden Betätigung des Bremspedals eine Bremsanlage im Sinne des Erzeugens einer Bremswirkung ansteuerbar ist, und
- als Ausgangsstellung die Stellung des Fahrpedals zu Beginn einer Betätigung durch den Fahrer sowie eine Betätigungsgeschwindigkeit des Fahrpedals erfasst wird, wobei
- aufgrund der Ausgangsstellung ein Betätigungsschwellenwert ermittelt wird,
- das Überschreiten des Betätigungsschwellenwerts durch die Betätigungsgeschwindigkeit überwacht wird, wenn eine Betätigung im Sinne des Anforderns einer geringeren Leistungsanforderung erfolgt und
- ein selbstständiges Betätigen der Bremsanlage erfolgt, wenn die Betätigungsgeschwindigkeit den Betätigungsschwellenwert übersteigt,
**dadurch gekennzeichnet, dass**
das selbsttätige Betätigen der Bremsanlage erst erfolgt, wenn das Fahrpedal die unbetätigte Ausgangsstellung erreicht.

2. Verfahren nach Anspruch 1, **dadurch gekennzeichnet, dass** die Ausgangsstellung aus der Position des Fahrpedals bei einem Vorzeichenwechsel für den Wert der Betätigungsgeschwindigkeit geschlossen wird, insbesondere wenn von einer Betätigung im Sinne des Erzeugens höherer Leistungsanforderung auf eine Betätigung im Sinne des Erzeugens niederer Leistungsanforderungen übergegangen wird.

3. Verfahren nach Anspruch 1 oder 2, **dadurch gekennzeichnet, dass** der Betätigungsschwellenwert als monoton steigende Funktion in Abhängigkeit der Ausgangstellung des Fahrpedals vorgegeben ist.

4. Verfahren nach Anspruch 3, **dadurch gekennzeichnet, dass** für einen unteren Bereich von Ausgangstellungen, der vorzugsweise bis zu ca. 10% des maximalen Betätigungsweges des Fahrpedals liegt, ein festgelegter Betätigungsschwellenwert gegeben ist.

5. Verfahren nach einem der Ansprüche 3 oder 4, **dadurch gekennzeichnet, dass** die monoton steigende Funktion überwiegend eine streng monoton steigende Funktion, insbesondere linear steigende Funktion ist.

6. Verfahren nach einem der Ansprüche 3 bis 5, **dadurch gekennzeichnet, dass** die monoton steigende Funktion in einem oberen Bereich von Ausgangsstellungen, insbesondere im Bereich oberhalb von ca. 90% des maximalen Betätigungsweges des Fahrpedals, einen sprunghaften Anstieg aufweist.

7. Verfahren nach Anspruch 6, **dadurch gekennzeichnet, dass** der sprunghafte Anstieg nur gegeben ist, wenn das Fahrzeug eine fahrerbetätigte Kupplung aufweist.

8. Verfahren nach einem der vorhergehenden Ansprüche, **dadurch gekennzeichnet, dass** das selbsttätige Betätigen derart erfolgt, dass ein Anlegen der Bremsbeläge erzeugt wird.

## Claims

1. Process of operating a vehicle
- having a driver actuated accelerator pedal for determining the demand for power output from the drive unit of the vehicle
- having a driver actuated brake pedal for carrying out braking procedures
- wherein, based on actuation of the brake pedal taking place, a brake installation can be activated for the purpose of producing braking action, and
- there are captured as start position the position of the accelerator pedal at the start of an actuation by the driver and also an actuation speed of the accelerator pedal, wherein
- an actuation threshold value is ascertained based on the start position
- overstepping of the actuation threshold value by the actuation speed is monitored when actuation takes place for the purpose of demanding a lower power output and
- independent actuation of the brake installation takes place when the actuation speed exceeds the actuation threshold value,
**characterised in that** the self acting actuation of the brake installation only takes place when the accelerator pedal reaches the unactuated start position.

2. Process according to claim 2, **characterised in that** the start position is deduced from the position of the accelerator pedal upon a change in the algebraic sign of the value of the actuation speed, especially upon a transition from actuation for the purpose of producing a higher power output demand, to actuation for the purpose of producing a lower power output demand.

3. Process according to claim 1 or 2, **characterised in that** the actuation threshold value is determined as a monotonically increasing function in dependence of the start position of the accelerator pedal.

4. Process according to claim 3, **characterised in that** a fixed actuation threshold value is given for a lower range of start positions, which preferably lies at up to about 10% of the maximum actuating travel of the accelerator pedal.

5. Process according to one of claims 3 and 4, **characterised in that** the monotonically increasing function is predominantly a strictly monotonically increasing function, especially a linearly increasing function.

6. Process according to one of claims 3 to 5, **characterised in that** the monotonically increasing function has a sudden increase in an upper range of start positions, especially in the region above about 90% of the maximum actuation travel of the accelerator pedal.

7. Process according to claim 6, **characterised in that** the sudden increase is given only when the vehicle has a driver actuated clutch action.

8. Process according to one of the preceding claims, **characterised in that** the self acting actuation takes place such that contact with the brake linings or pads is produced.

## Revendications

1. Procédé d'opération d'un véhicule
- avec une pédale de l'accélérateur pouvant être actionnée par le conducteur servant à prescrire une demande de puissance pour le dispositif d'entraînement du véhicule
- avec une pédale de frein pouvant être actionnée par le conducteur servant à réaliser des processus de freinage,
- en raison d'un actionnement de la pédale de frein, un système de freinage pouvant être commandé au sens de la génération d'un effet de freinage, et
- la position de la pédale de l'accélérateur au début d'un actionnement par le conducteur ainsi qu'une vitesse d'actionnement de la pédale de l'accélérateur étant recensées comme position de départ, où
- en raison de la position de départ, une valeur seuil d'actionnement sera calculée,
- le dépassement de la valeur seuil d'actionnement par la vitesse d'actionnement sera surveillé lorsqu'un actionnement est effectué au sens de l'exigence d'une demande de puissance moindre et
- un actionnement automatique du système de freinage est effectué lorsque la vitesse d'actionnement dépasse la valeur seuil d'actionnement,
**caractérisé en ce que** l'actionnement automatique du système de freinage n'est effectué que lorsque la pédale de l'accélérateur atteint la position de départ au repos.

2. Procédé selon la revendication 1, **caractérisé en ce que** la position de départ est fermée depuis la position de la pédale de l'accélérateur lors d'un changement de signe pour la valeur de la vitesse d'actionnement, en particulier lorsqu'on passe d'un actionnement au sens de la génération de demande de puissance supérieure à un actionnement au sens de la génération de demandes de puissance moindres.

3. Procédé selon la revendication 1 ou 2, **caractérisé en ce que** la valeur seuil d'actionnement est prescrite comme fonction croissante de manière monotone selon la position de départ de la pédale de l'accélérateur.

4. Procédé selon la revendication 3, **caractérisé en ce que** pour une zone inférieure de positions de départ qui se trouve de préférence à environ 10 % maximum de la course d'actionnement maximale de la pédale de l'accélérateur, une valeur seuil d'actionnement déterminée est donnée.

5. Procédé selon l'une quelconque des revendications 3 ou 4, **caractérisé en ce que** la fonction croissante de manière monotone est principalement une fonction croissante strictement de manière monotone, notamment une fonction croissante linéairement.

6. Procédé selon l'une quelconque des revendications 3 ou 5, **caractérisé en ce que** la fonction croissante de manière monotone présente une hausse brusque dans une zone supérieure de positions de départ, notamment dans la zone au-dessus d'environ 90 % de la course d'actionnement maximale de la pédale de l'accélérateur.

7. Procédé selon la revendication 6, **caractérisé en ce que** la hausse brusque n'est donnée que lorsque le véhicule présente un embrayage actionné par le conducteur.

8. Procédé selon l'une quelconque des revendications précédentes, **caractérisé en ce que** l'actionnement automatique est effectué de telle sorte qu'un appui des plaquettes de frein soit généré.
